# EUROPÄISCHE PATENTSCHRIFT

(11) **EP 1 531 750 B1**
(45) Veröffentlichungstag und Bekanntmachung des Hinweises auf die Patenterteilung: **27.08.2014**
(21) Anmeldenummer: 03712123.3
(22) Anmeldetag: 01.04.2003
(51) Int. Cl.: A61C 1/00, A61C 1/08

(54) **ZAHNMEDIZINISCHES BEHANDLUNGSSYSTEM**
DENTAL TREATMENT SYSTEM
SYSTEME DE TRAITEMENT DENTAIRE

(30) Priorität: 28.08.2002 DE 10239586
(43) Veröffentlichungstag der Anmeldung: 25.05.2005
(73) Patentinhaber: Schmid, Heribert, 82194 Gröbenzell (DE)
(72) Erfinder: Schmid, Heribert, 82194 Gröbenzell (DE)
(74) Vertreter: TBK
(86) Internationale Anmeldenummer: PCT/EP2003/003387
(87) Internationale Veröffentlichungsnummer: WO 2004/019803

(56) Entgegenhaltungen:
- EP-A- 1 172 071
- EP-A- 1 226 789
- WO-A-99/58076
- WO-A1-03/092526

## Beschreibung

Die vorliegende Erfindung betrifft einen zahnmedizinischen Bohrer nach dem Oberbegriff von Anspruch 1.

Des weiteren betrifft die vorliegende Erfindung ein System bestehend aus einem zahnmedizinischen Bohrer und einer Vorrichtung nach Anspruch 10.

Außerdem betrifft die vorliegende Erfindung das genannte System, das zusätzlich ein Bereitstellungsgerät bzw. ein Behandlungsgerät aufweist.

Elektrisch angetriebene Bohrer werden insbesondere in der Zahnmedizin zur Zahnbehandlung als sogenannte medizinische Endo-Werkzeuge eingesetzt. Dabei wird der Bohrer von einem Elektromotor angetrieben, wobei der Bohrer bei-spielsweise in einem zahnmedizinischen Handstück eines Behandlungsgerätes gelagert ist.

Nach einem Stand der Technik, wie er z. B. in der Druckschrift DE 198 20 639 A1 offenbart ist, wird der Bohrer durch einen Schrittmotor angetrieben. Mit einer geeigneten Steuerungseinrichtung für den Schrittmotor kann eine zulässige Drehmomentbelastungsgrenze und/oder ein zulässiger Drehzahlbereich des jeweils eingesetzten Bohrers überwacht und gesteuert werden. Die Steuerung wird über die anliegende Stromstärke und die Drehfeldfrequenz durchgeführt.

Umfangreiche Experimente erbrachten das Ergebnis, dass mit einem Schrittmotor als Antrieb für derzeit bekannte Endo-Werkzeuge deren Abbrechen im praktischen Einsatz verhindert wird. Hierbei macht man sich den Effekt des "außer Tritt Fallens" von Schrittmotoren zunutze, der maximal ein Blockieren des Motors bei Überlastung bewirkt. Der regelungstechnische Aufwand bleibt dabei äußerst gering und beschränkt sich im wesentlichen auf das Einstellen der Stromstärke und der Impulsgebung für den Schrittmotor.

In anderen Worten ausgedrückt, ermöglicht diese Entwicklung den erweiterten Einsatz elektrischer Antriebe auf Werkzeuge mit geringer Bruchlast bei einer erheblichen Verringerung der Gefahr eines Abbrechens des Werkzeugs. Damit wird die Möglichkeit eröffnet,, ein Werkzeug mehrmals zu verwenden. Es hat sich nunmehr herausgestellt, dass die von der Erfinderin zwischenzeitlich ermittelten Bruchbelastungsgrenzen für Endo-Werkzeuge bzw. Endo-Bohrer mit zunehmender Einsatzdauer Veränderungen unterworfen sind. Im Rahmen von Versuchen konnte somit analytisch für einige Endo-Werkzeuge eine Maximal-Verwendungsdauer ermittelt werden, innerhalb der die Bruchwahrscheinlichkeit gering und die Schneidfähigkeit der Werkzeuge ausreichend ist. Bei Überschreiten dieser Maximal-Verwendungsdauer zeigten sich vermehrt Brüche in Folge von Materialermüdung sowie eine erhebliche Verschlechterung des erzielten Schnittbildes.

Um somit die Leistungsfähigkeit sowie das Sicherheitspotential des von der Erfinderin neu entwickelten Antriebskonzeptes voll ausnützen zu können, ist eine möglichst genaue Kenntnis über den Zustand des verwendeten Werkzeugs erforderlich, um in jedem Fall ein Abbrechen, nicht etwa in Folge eines unsachgemäßen Antriebs (Überlastung), sondern in Folge einer Materialermüdung bei zu langem Einsatz zu verhindern. Ausserdem ist es notwendig, die Information über den Zustand eines Werkzeugs dem Anwender möglichst einfach und sicher zur Verfügung zu stellen.

Wie in einem weiteren Stand der Technik gemäß DE 198 20 640 A1 offenbart ist, wird ein Magazin für unterschiedliche Werkzeuge vorbereitet, in dem die Werkzeuge nummeriert oder anderweitig codiert gebunkert sind. Dabei können für verschiedene medizinische Behandlungsarten Magazine mit verschiedenartigen Bohrern vorbereitet werden, die in vorbestimmten Reihenfolgen in dem Magazin eingesetzt sind. Die Reihenfolge und Art der Bohrer sowie Betriebsparameter der einzelnen Bohrer können dabei in einen Computer eines Bereitstellungsgerätes eingegeben und dort verwaltet werden. Dabei kann das Bereitstellungsgerät auch aus einem PC bestehen.

EP 1 155 654 A offenbart ein Endoskop mit einem Transponder.

Es ist die Aufgabe der Erfindung, ein System zur Identifizierung und Überwachung eines zahnmedizinischen Bohrers zu schaffen, mit dem die Sicherheit einer medizinischen Behandlung bei gleichzeitiger Vereinfachung der Anwendung erhöht werden kann.

Diese Aufgabe wird erfindungsgemäß durch einen zahnmedizinischen Bohrer mit den Merkmalen des Anspruchs 1, bzw. ein System mit den Merkmalen des Anspruchs 10 gelöst.

Ein Magazin zur Aufnahme von zumindest einem zahnmedizinischen Bohrer weist Codierungen auf, die unter Berücksichtigung von Gebrauchsinformationen zum Bohrer veränderbar sind. Dadurch sind die Informationen, die den Bohrer betreffen, am Magazin und somit in direkter Nähe zum Bohrer verfügbar. Eine Verwechslung wird damit ausgeschlossen. Außerdem wird beim Transport des Magazins die Information mitgeführt. Die Codierung kann auf jede Art vorgenommen werden, solange die erfindungsgemäße Erkennbarkeit und Veränderbarkeit sichergestellt ist. Dabei kann beim Einsatz von mehreren Bohrern jedem Bohrer, das von dem Magazin aufgenommen ist, bzw. der Position des Bohrers eine einzelne, eigenständige Codierung zugeordnet sein.

Der erfindungsgemäße zahnmedizinische Bohrer Codierungen aufweist, die-unter Berücksichtigung von Gebrauchsinformationen zum Bohrer veränderbar sind. Damit liegen die Informationen direkt am Bohrer vor.

Ferner weist das Magazin Fixcodierungen auf, die zur Identifizierung eines bestimmten Magazins und/oder eines bestimmten zahnmedizinischen Bohrers geeignet sind. Damit wird weiter sichergestellt, dass eine Verwechslung von Magazinen und/oder von zahnmedizinischen Bohrern auftritt. Gleichzeitig kann ein Datensatz direkt einem Magazin zugeordnet werden.

Es ist besonders vorteilhaft, dass der zahnmedizinische Bohrer Fixcodierungen aufweist, die zur Identifizierung eines bestimmten medizinischen Bohrers und/oder eines bestimmten Magazins geeignet sind. Dadurch kann durch die Informationen am Bohrer die Verwechslung von Magazinen und/oder zahnmedizinischen Bohrern vermieden werden.

Ferner sind die Codierungen und/oder Fixcodierungen in zumindest einem Transponder als Datenträgerelement speicherbar, der an dem Magazin fest angebracht ist. Dadurch kann verhindert werden, dass der Transponder als Datenträgerelement von dem Magazin getrennt wird, wodurch eine Zuordnung von denselben erschwert werden kann.

Erfindungsgemäß ist der Transponder an dem zahnmedizinischen Bohrer fest angebracht Dadurch kann verhindert werden, dass der Transponder als Datenträgerelement von dem zahnmedizinischen Bohrer getrennt wird, wodurch deren Zuordnung erschwert werden kann.

Gemäß einer weiteren bevorzugten Ausführungsform ist der Transponder einstückig mit dem zahnmedizinischen Bohrer ausgebildet.

Gemäß einer weiteren bevorzugten Ausführungsform ist der Transponder an einem Absatz des zahnmedizinischen Bohrers in Anlage bringbar. Dadurch wird die Bewegung des Transponders in die axiale Richtung des Bohrers beschränkt. Außerdem ist der Transponder durch eine auf den zahnmedizinischen Bohrer aufsteckbare Hülse in Anlage an dem Absatz gehalten. Damit wird die Bewegung des Transponders in axiale Richtung weitgehend unmöglich.

Gemäß einer weiteren bevorzugten Ausführungsform haben der Schaft des zahnmedizinischen Bohrers, der Transponder und die Hülse im Wesentlichen den gleichen Außendurchmesser. Dadurch kann der zahnmedizinische Bohrer so gestaltet werden, dass er sich nicht wesentlich von einem zahnmedizinischen Bohrer ohne den Transponder unterscheidet und mit Vorrichtungen nach dem Stand der Technik verwendbar sind.

Gemäß einer weiteren bevorzugten Ausführungsform ist der Transponder an den zahnmedizinischen Bohrer aufsteckbar und/oder von diesem abnehmbar ausgebildet. Dadurch kann der Transponder ausgetauscht werden und damit weiterverwendet werden, wenn die Lebensdauergrenze des zahnmedizinischen Bohrers erreicht ist.

Gemäß einer weiteren bevorzugten Ausführungsform ist der Transponder an einem Umfang des zahnmedizinischen Bohrers vorgesehen. Der zahnmedizinische Bohrer ist ein rotationssymmetrisches Element. Mit einem am Umfang des Bohrers vorgesehenen Transponder kann der Außendurchmesser des betriebsbereiten Bohrers minimiert werden. Außerdem können erweiterte Funktionen der Einlesung und/Auslesung der Informationen des Transponders ermöglicht werden.

Gemäß einer weiteren bevorzugten Ausführungsform umfassen die Gebrauchsinformationen die Position des Bohrers an dem Magazin, eine werkzeugspezifische zulässige akkumulierte Belastung des Bohrers, eine akkumulierte Teilbelastung des Bohrers und/oder die Anzahl der gefahrenen Sterilisationszyklen für den Bohrer. Damit können Informationen bereitgestellt werden, die die Betriebssicherheit und die Anwendung bei der Behandlung verbessern. Die Gebrauchsinformationen können auch Art, Aufbau, Einsatzparameter und andere den Bohrer selbst betreffende Informationen sowie die Anzahl der zulässigen und/oder bisher gefahrenen Behandlungszyklen umfassen.

Gemäss einer weiteren bevorzugten Ausführungsform ist das Werkzeug ein EndoBohrer.

Das Magazin ist mit einer Abdeckung abdeckbar, die vorzugsweise zumindest teilweise durchsichtig ist und gegenüber einer Sterilisierung beispielsweise mittels Autoklavieren widerstandsfähig ist. Damit können auch im gelagerten Zustand des Magazins, insbesondere wenn die Abdeckung aufgesetzt ist, die Anordnung der Bohrer und die Bohrer selbst sichtgeprüft werden. Die Abdeckung ist dafür vorzugsweise zumindest an der Oberseite durchsichtig.

Der zahnmedizinische Bohrer mit dem Tansponder oder das Magazin und der Bohrer sind vorzugsweise durch Autoklavieren sterilisierbar. Dadurch wird sichergestellt, dass der Sterilisationsbetrieb wie üblich möglich bleibt. Die Codierung bzw. der Transponder ist somit zumindest gegenüber den Bedingungen beim Autoklavieren widerstandsfähig.

Erfindungsgemäß weist das System von Anspruch 10 eine Vorrichtung zur Aufnahme eines zahnmedizinischen Bohrers und/oder eines Magazins mit zumindest einem zahnmedizinischen Bohrer auf, welche eine Einrichtung zum Erkennen von Codierungen des zahnmedi-zinischen Bohrers und zum Verändern der Codierungen unter Berücksichtigung von Gebrauchsinformationen zum Bohrer aufweist. Mit dieser Vorrichtung können die Codierungen gleichsam sowohl auf den aktuellen Stand bezüglich der Gebrauchsinformationen der Bohrer gebracht werden als auch erkannt bzw. eingelesen werden.

Gemäß einer weiteren bevorzugten Ausführungsform kann die Einrichtung der Vorrichtung Fixcodierungen des zahnmedizinischen Bohrers erkennen, die zur Identifizierung eines bestimmten zahnmedizinischen Bohrers geeignet sind. Dadurch wird eine Verwechslung der zahnmedizinischen Bohrer vermieden und ein Datensatz kann einem zahnmedizinischen Bohrer zugeordnet werden. Gemäß einer weiteren bevorzugten Ausführungsform kann die Einrichtung der Vorrichtung Codierungen und/oder Fixcodierungen erkennen, die in zumindest einem an dem zahnmedizinischen Bohrer fest angebrachten Transponder als Datenträgerelement speicherbar sind.

Gemäß einer weiteren bevorzugten Ausführungsform umfassen die Gebrauchsinformationen die Position des Bohrers an dem Magazin, eine werkzeugspezifische maximale Belastungsakkumulation und/oder eine Teilbelastungsakkumulation des Bohrers. Zusätzlich oder ersetzend ist auch eine Selbsterklärung der Position des Bohrers an dem Magazin vorgesehen. Dabei sind Markierungen in der Gestalt von Ziffern, Buchstaben, Farben oder anderen Unterscheidungsmerkmalen an den Positionen der Bohrer angebracht, die den Bohrern einfach zuzuordnen sind. Vorzugsweise sind Farbmarkierungen an den Löchern des Magazins angebracht, die Farbmarkierungen des Bohrers entsprechen.

Gemäß einer weiteren bevorzugten Ausführungsform weist die Vorrichtung ein Behandlungsgerät zur Steuerung und zum Antrieb des medizinischen Werkzeugs auf, wobei das Werkzeug ein zahnmedizinischer Bohrer, vorzugsweise ein Endo-Bohrer ist.

Außerdem ist die Vorrichtung zur Datenübertragung mit dem Behandlungsgerät verbunden. Damit können u. a. Daten, die sich auf den Gebrauch eines Bohrers beziehen, zwischen dem Behandlungsgerät und dem Transponder des medizinischen Werkzeugs übertragen werden.

Gemäß einer weiteren bevorzugten Ausführungsform ist die Datenübertragungseinrichtung die Datenübertragung zwischen zwei voneinander trennbaren Elementen des Behandlungsgeräts kontaktlos bewirkt. Die Datenübertragung zwischen beispielsweise einem Winkelstück und einem Handstück kann damit ermöglicht werden, die zweckmäßig voneinander trennbar sind, um die Konfiguration an die Behandlung anzupassen.

Insbesondere kann die Datenübertragung durch eine elektrische Steckverbindung verwirklicht werden. Diese Art der Übertragung ist besonders einfach und sicher.

Gemäß einer weiteren bevorzugten Ausführungsform überträgt die Datenübertragungseinrichtung die Daten induktiv. Eine induktive Datenübertragung kann einfach und sicher mit bekannten Techniken bewerkstelligt werden.

Gemäß einer weiteren bevorzugten Ausführungsform weist die Datenübertragungseinrichtung an jedem der zwei voneinander trennbaren Elementen eine Induktionsspule auf. Induktionsspulen ermöglichen die kontaktlose Datenübertragung, sind zudem kostengünstig und können versiegelt werden, so dass sich keine zusätzliche Empfindlichkeit gegenüber Umwelteinflüssen ergibt.

Gemäß einer weiteren bevorzugten Ausführungsform umfassen die voneinander trennbaren Elemente des Behandlungsgeräts ein Handstück und ein Winkelstück.

Gemäß einer weiteren bevorzugten Ausführungsform die Vorrichtung an dem Handstück angeordnet ist. Damit können Daten des Transponders an dem zahnmedizinischen Bohrer durch Handhabung des Winkelstücks verarbeitet bzw. übertragen oder eingelesen/geschrieben werden.

Gemäß einer weiteren bevorzugten Ausführungsform weist die Vorrichtung ein Bereitstellungsgerät zur Bereitstellung und Auswahl des Magazins und/oder der einzusetzenden Bohrer (Bohrertypen) auf, wobei die Vorrichtung zur Datenübertragung mit dem Bereitstellungsgerät verbunden ist. Damit wird ein Datenaustausch zwischen dem zahnmedizinischen Bohrer und einem Bereitstellungsgerät ermöglicht, das beispielsweise in einem Computer Daten zur Behandlung und zu den einzusetzenden Bohrer enthält.

Des weiteren ist erfindungsgemäß ein System vorgesehen, das aus dem zahnmedizinischen Bohrer und/oder einem Magazin und einer Vorrichtung besteht. Dabei kann auch das Behandlungsgerät ein Teil des Systems sein. Außerdem kann das System des weiteren mit einem Bereitstellungsgerät versehen sein. Damit kann ein aufeinander abgestimmtes System bereitgestellt werden, das die Betriebssicherheit erhöht und die Anwendung vereinfacht.

Die Erfindung wird nachstehend anhand von bevorzugten Ausführungsbeispielen unter Bezugnahme auf die beigefügten Zeichnungen näher erläutert.
Fig. 1 stellt ein Vergleichsbeispiel des Magazins dar.
Fig. 2 stellt ein Ausführungsbeispiel eines erfindungsgemäßen Systems mit dem Magazin gemäß Fig. 1 und Vorrichtungen zum Erkennen und Verändern der Codierungen des Magazins dar, die zur Datenübertragung mit einem Behandlungsgerät und einem Bereitstellungsgerät verbunden werden können.
Fig. 3 zeigt ein medizinisches Werkzeug, das mit einem ringförmigen Transponder versehen ist, als ein weiteres Ausführungsbeispiel der vorliegenden Erfindung.
Fig. 4 zeigt ein weiteres Ausführungsbeispiel der vorliegenden Erfindung, bei dem eine Datenübertragungseinrichtung und eine Vorrichtung zum Einlesen/Schreiben von Daten an einer Handstück-Winkelstück-Kombination vorgesehen sind.
Fig. 5 stellt ein weiteres Ausführungsbeispiel des medizinischen Werkzeugs mit dem Transponder gemäß der Erfindung dar.

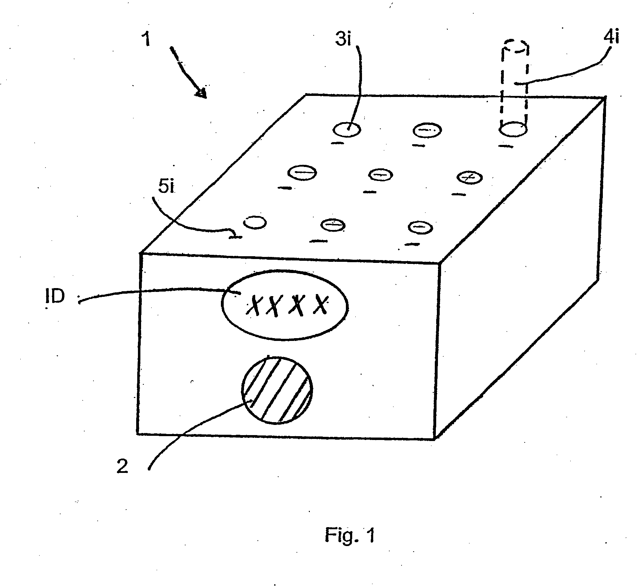

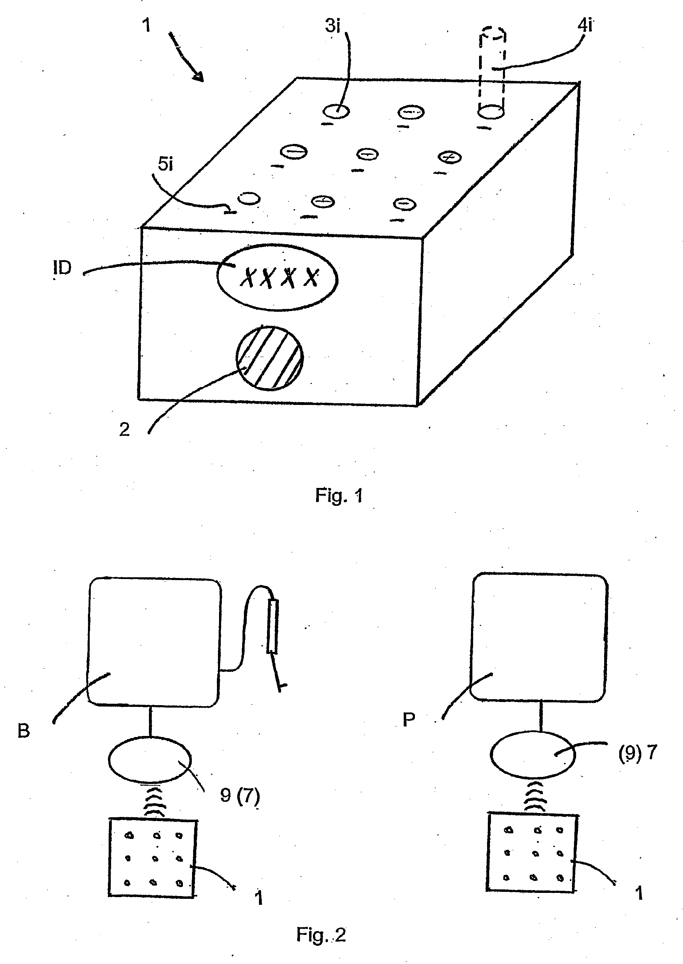

Zunächst wird unter Bezugnahme von Fig. 1 das Magazin gemäß einem Beispiel näher erläutert. Das Magazin 1 besteht aus einem standfähigen Körper, an dessen Oberseite Löcher 3i vorgesehen sind. Die Innendurchmesser der Löcher 3i sind so gewählt, dass Bohrer 4i mit der Spitze voran in die Löcher eingeführt und so in dem Magazin aufbewahrt werden können.

Wahlweise kann das Magazin auch so gestaltet sein, dass die Bohrer mit dem Schaft aufgenommen werden und die Spitzen am oberen Ende des Magazins herausstehen.

Das Magazin trägt an einer Seite eine Identifikationsbezeichnung ID, mit der jedes Magazin als Unikat kenntlich gemacht wird. Außerdem ist an jedem einzelnen Loch 3i an der Oberseite ebenfalls sichtbar eine Unterscheidungsmarkierung 5i angebracht, so dass jedes einzelne Loch von den anderen Löchern unterscheidbar ist. Diese Unterscheidungsmarkierungen können verschiedene Farben, Ziffern, Buchstaben oder andere Zeichen umfassen.

Des Weiteren ist an dem Körper 1 des Magazins zumindest ein Transponder 2 angebracht. Der Transponder 2 ist fest an dem Körper 1 des Magazins angebracht. Der Transponder 2 weist ein

Datenspeicherelement auf, das Daten enthält, die unveränderlich und/oder veränderlich sind. Die unveränderlichen Daten bzw. die Fixcodierungen in dem Datenspeicherelement betreffen beispielsweise die Identifikationsbezeichnung des Magazins. Diese wird beispielsweise bei der Herstellung des Magazins 1 mit dem Transponder 2 einmalig festgelegt. Dabei muss die sichtbare Identifikationsbezeichnung nicht-zwingend der gespeicherten Bezeichnung des Magazins entsprechen. Die veränderlichen Daten in dem Datenspeicherelement beinhalten Informationen bezüglich der in dem Magazin aufbewahrten Bohrer. Im folgenden wird zur Erklärung der die Bohrer betreffenden Informationen unter Bezugnahme auf Fig. 2 näher auf die Vorgehensweise bei der Verwendung der Bohrer eingegangen.

Fig. 2 stellt ein Ausführungsbeispiel eines erfindungsgemäßen Systems mit dem Magazin gemäß Fig. 1 und Vorrichtungen zum Erkennen und Verändern der Codierungen des Magazins dar, die zur Datenübertragung mit einem Behandlungsgerät und einem Bereitstellungsgerät verbunden sind.

Zur Vorbereitung eines Magazins 1 wird dieses vorzugsweise mit verschiedenartigen Bohrern 4i für eine bestimmte Behandlungsprozedur bestückt. Dabei kann die Bestückung und die Reihenfolge der Bohrer für das Magazin 1 einem Programm unter Eingabe der ausgewählten Behandlungsprozedur in ein rechnergestütztes Bereitstellungsgerät P entnommen werden. Die Bohrer werden entweder manuell entsprechend den Angaben des Programms in das Magazin an die vorgegebenen Positionen eingesetzt oder es wird ein bereits vorbereitetes Magazin bereitgestellt, das den Vorgaben entspricht. Über eine Vorrichtung 7 werden die Daten bezüglich der Bohrer auf das Datenspeicherelement übertragen. Dazu wird das Magazin 1 mit dem Transponder 2 in die Nähe der Vorrichtung 7 gebracht und dadurch die Informationen zwischen der Vorrichtung 7 und dem Transponder 2 ausgetauscht. Damit ist das Magazin 1 bereit zur Verwendung bei der Behandlung. Dazu wird das Magazin an einem Behandlungsgerät B bereitgestellt.

Das Datenspeicherelement des Transponders 2 enthält zu diesem Zeitpunkt neben der Identifikationsbezeichnung Informationen bezüglich der Art und Position einzelner Bohrer, der bisherigen akkumulierten Belastung jedes einzelnen Bohrers. Die akkumulierte Belastung eines Bohrers umfasst dabei die Dauer und Art der Belastung des Bohrers, der ein Bohrer bis zum aktuellen Zeitpunkt ausgesetzt wurde. Die Belastung kann beispielsweise theoretisch aus Werten für gefahrene Umdrehungszahlen, Drehmoment, Betriebsdauer und der Anzahl der Sterilisationszyklen ermittelt werden. Ausserdem liegen zu einem Bohrer Informationen bezüglich der zulässigen akkumulierten Belastung vor, die bei der Behandlung nicht zu überschreiten ist.

Zu Beginn wählt der behandelnde Arzt an dem Behandlungsgerät die geplante Behandlungsprozedur aus. Die Daten in dem Datenspeicherelement eines Magazins werden daraufhin in das Behandlungsgerät eingelesen, wodurch dem Behandlungsgerät sowohl die ID des ausgewählten Magazins als auch die Daten bezüglich der Bohrer des Magazins zugänglich werden. Zum Einlesen der Informationen des Datenspeicherelements wird das Magazin in die Nähe der Vorrichtung 9 geführt.

Nachdem das Werkzeug, beispielsweise ein flexibler Spiralbohrer für eine Wurzelkanalaufbereitung, in das Handstück eingesetzt und der Rechner des Behandlungsgerätes über das verwendete Werkzeug informiert ist, beginnt der Arzt mit der Behandlung, in dem das Antriebsgerät angefahren wird. Mit Anfahren des Antriebsgeräts wertet der Rechner des Behandlungsgerätes fortlaufend beispielsweise die Betriebszeitdauer, die Stromhöhe als Ausgangswert zur Bestimmung der Belastungshöhe, die Drehzahl und/oder im Falle eines Schrittmotors die Anzahl von Takten als Referenzwert gefahrener Umdrehungen aus und speichert diese Auswertung als zustandsspezifische Werte in einem Zwischenspeicher ab. Zusätzlich ist vorgesehen, dass die Behandlungszyklen und/oder die Sterilisationszyklen insbesondere für einen ausgewählten oder alle Bohrer gezählt und gespeichert werden.

Nach Beendigung der Behandlung schaltet der Arzt das Antriebsgerät ab oder gibt alternativ ein Beendigungssignal in das Behandlungsgerät ein, um diesem das Behandlungsende für dieses Werkzeug anzuzeigen. Der Rechner wertet nunmehr die gemessenen und abgespeicherten zustandsspezifischen Werte aus, welche ein Belastungsprofil für die vergangene Behandlung darstellen und errechnet hieraus eine akkumulierte theoretische Teilbelastung. Diese Teilbelastung wird nunmehr einer akkumulierten Gesamtbelastung aus ggf. vorhergehenden Behandlungen mit dem selben Werkzeug hinzu addiert, um somit die akkumulierte Gesamtbelastung für dieses Werkzeug zu aktualisieren. Diese Daten werden dann über die Vorrichtung 9 in das Speicherelement des Magazins 1 übertragen.

Das vom Arzt verwendete Werkzeug wird nach der Behandlung in den Behälter zurückgesteckt. Behälter und Werkzeuge werden anschließend gereinigt und einem Sterilisationsvorgang unterzogen. Es hat sich in Versuchen gezeigt, daß dieser Sterilisationsvorgang die Werkzeuge angreift und zu einer beschleunigten Materialalterung insbesondere einem Abstumpfen der Werkzeuge führt. Aus diesem Grunde wird auch die Anzahl der Sterilisationszyklen ausgewertet und in dem Speicherelement des Magazins abgelegt.

Das Behandlungssystem vergleicht nunmehr nach Aktualisieren der tatsächlichen zustandsspezifischen Werte, insbesondere der Gesamtzahl an Sterilisationszyklen sowie der Gesamtbelastung, diese Ist-Werte mit den maximal zulässigen, werkzeugspezifischen Werten für das verwendete Werkzeug und gibt bei Erreichen oder Überschreiten eines der Maximalwerte ein Warnsignal aus, welches dem Arzt den notwendigen Austausch dieses Werkzeugs anzeigt. In diesem Fall wird der Arzt das Werkzeug nicht mehr im Behälter ablegen, sondern durch ein Neues ersetzen.

Wie aus der vorstehenden Beschreibung ersichtlich ist, wird in diesem Ausführungsbeispiel erst nach Beendigung einer Behandlung der Ist-Zustand des Werkzeugs ermittelt und mit dem maximal zulässigen Zustand verglichen. Es kann jedoch der Fall auftreten, daß bereits während einer Behandlung beispielsweise die maximale Benutzungsdauer d.h. die vorbestimmte maximale Gesamtbelastungsmenge erreicht oder sogar überschritten wird. Um dieses Problem auf einfache Weise zu lösen, wird gemäß dem bevorzugten Ausführungsbeispiel bei der Bestimmung der maximalen Gesamtbelastungsmenge ein Sicherheitsfaktor mit eingerechnet, der derart gewählt ist, daß im Rahmen einer durchschnittlichen Behandlung mit dem entsprechenden Werkzeug diese tatsächliche max. Belastungsmenge nicht erreicht werden kann.

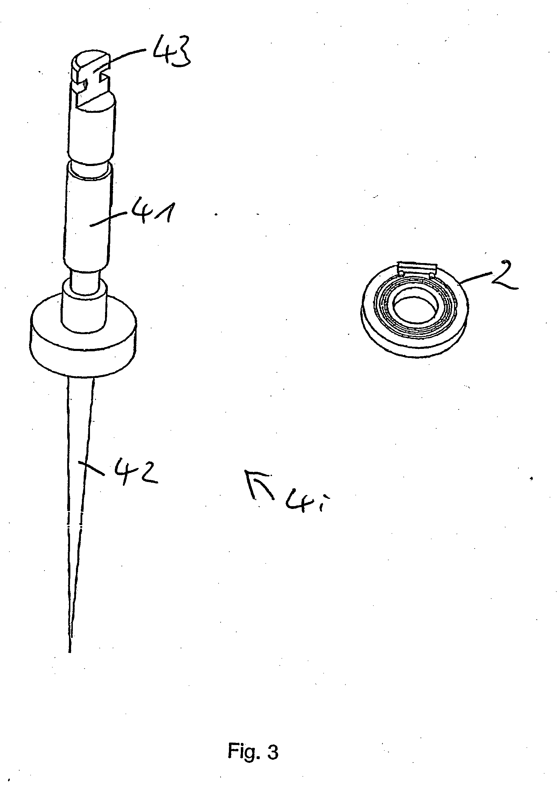

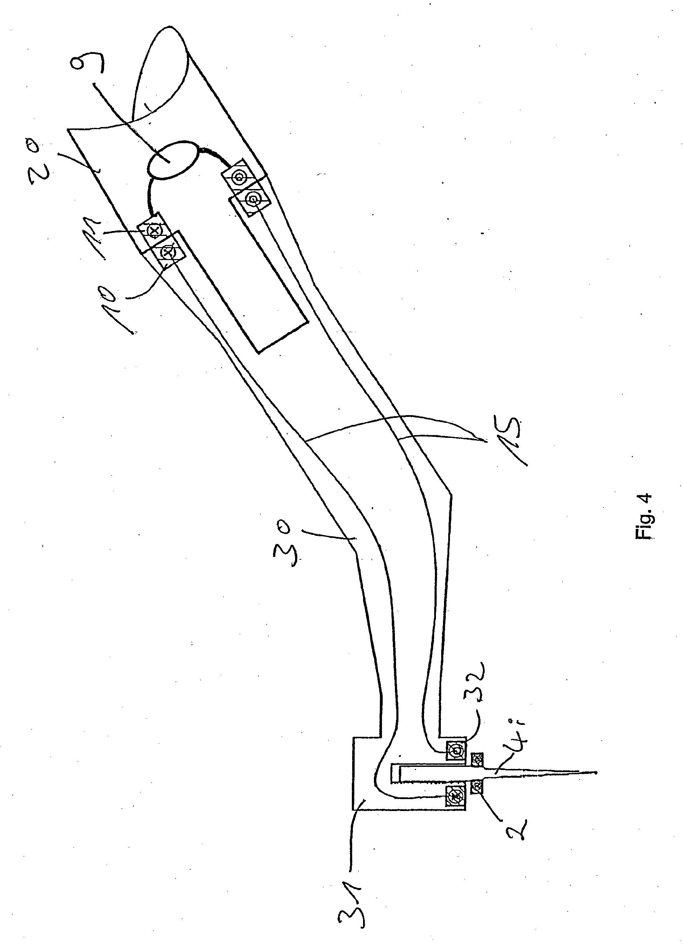

Im folgenden wird ein weiteres Ausführungsbeispiel der vorliegenden Erfindung unter Bezugnahme auf Fig. 3 und Fig. 4 beschrieben, das sich als besonders vorteilhaft erwiesen hat.

Fig. 3 zeigt ein medizinisches Werkzeug 4i, das mit einem Transponder 2 versehen ist. Das medizinische Werkzeug hat eine Behandlungsspitze 42 und einen Schaft 41. Das medizinische Werkzeug 4i wird über einen Absatz 43 an dem Schaft 41 angetrieben.

Fig. 4 zeigt ein medizinisches Behandlungsgerät, das ein Winkelstück 30 und ein Handstück 20 umfaßt. Das Winkelstück 30 ist trennbar an dem Handstück 20 angebracht. An dem freien Ende des Winkelstücks 30 ist ein Werkzeugaufnahmekopf 31 angeordnet. Zwischen dem Winkelstück 30 und dem Handstück 20 ist eine Datenübertragungseinrichtung 10, 11 angeordnet. Diese Datenübertragungseinrichtung umfasst eine Induktionsspule 10 an dem Winkelstück 30 und eine Induktionsspule 11 an dem Handstück 20. Die Induktionsspulen 10, 11 sind im Zusammengebauten Zustand von Winkelstück und Handstück angrenzend aneinander oder zumindest einander nah angeordnet.

An dem Werkzeugaufnahmekopf 31 ist das medizinische Werkzeug 4i einsteckbar. Damit kann das medizinische Werkzeug über den Absatz 43 in Eingriff mit einer Antriebseinheit gebracht werden, die in dem Winkelstück 30 vorgesehen ist.

Außerdem ist an dem Werkzeugaufnahmekopf 31 eine Lese-/Schreibeinrichtung 32 für dem Transponder 2 des medizinischen Werkzeugs 4i und/oder des Magazins 1 angeordnet. Diese Lese-/Schreibeinrichtung 32 entspricht dabei der Einrichtung zum Erkennen von Codierungen des Werkzeugs 4i und/oder des Magazins 1 und zum Verändern der Codierungen unter Berücksichtigung der Gebrauchsinformationen zum Werkzeug, die in dem vorhergehenden Ausführungsbeispiel beschrieben ist.

Die Lese-/Schreibeinrichtung 32 ist über eine Verdrahtung 15 mit der Induktionsspule 10 zum Datenaustausch verbunden, die in dem Handstück 30 vorgesehen ist.

Die Verdrahtung 15 mit den Induktionsspulen 10 und 11 dient als eine Datenleitung für die Vorrichtung zum Verändern und Erkennen von Codierungen an dem Magazin und/oder an dem medizinischen Werkzeug. Das Verändern und Erkennen der Codierungen kann also an der Lese-/Schreibeinrichtung 32 oder an der Vorrichtung in dem Handstück durchgeführt werden, indem ein medizinisches Werkzeug oder ein Magazin mit einem Transponder in die Nähe der Lese-/Schreibeinrichtung oder die Vorrichtung beispielsweise in dem Handstück gebracht wird.

Die vorstehend definierten Gebrauchsinformationen zum medizinischen Werkzeug 4i neben weiteren Daten können über die Lese-/Schreibeinrichtung 32 eingelesen/geschrieben werden. Die Datenübertragung verläuft dabei gemäß diesem Ausführungsbeispiel über die Datenübertragungseinrichtung 10,11, die Verdrahtung 15 und die Lese-/Schreibeinrichtung 32 an dem Werkzeugaufnahmekopf 31.

Die Lese-/Schreibeinrichtung 32 ist gemäß dem vorliegenden Ausführungsbeispiel auch dazu geeignet, die Daten des Transponders 2 einzulesen/zu schreiben, der an dem Magazin 1 des Vergleichsbeispiels angeordnet ist.

Das vorliegende Ausführungsbeispiel unterscheidet sich von dem vorhergehenden Ausführungsbeispiel dahingehend, dass der Transponder 2 gemäß dem vorliegenden Ausführungsbeispiel an dem medizinischen Werkzeug 4i angeordnet ist, wohingegen der Transponder 2 gemäß dem Vergleichsbeispiel an dem Magazin 1 angeordnet ist. Es ist auch möglich, dass sowohl das Magazin 1 als auch das medizinische Werkzeug 4i mit einem Transponder 2 versehen sind.

Erfindungsgemäß können die Informationen der Transponder 2 an dem medizinischen Werkzeug durch die Lese-/Schreibeinrichtung 32 oder eine von dieser gesondert angeordneten Lese-/Schreibeinrichtung eingelesen/geschrieben werden.

Der Transponder 2 gemäß dem vorliegenden Ausführungsbeispiel besteht aus einem ringförmigen Element, das auf den äußeren Umfang des medizinischen Werkzeugs aufgesteckt werden kann. Eine Antenne zur Datenübertragung mit der Lese-/Schreibeinrichtung kann in dem Transponder 2 integriert sein.

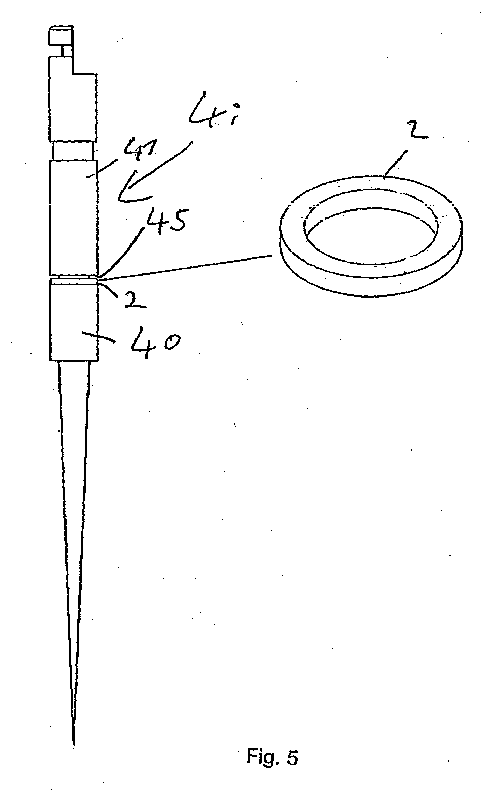

Gemäß dem in Fig. 5 dargestellten Ausführungsbeispiel ist der Transponder auf einem verringerten Durchmesser des Schafts des Bohrers aufgeschoben. Eine axiale Seitenfläche des Tranponders ist in Anlage mit einem Absatz 45 gebracht, an dem der Bereich mit verringertem Durchmesser in dem Bereich mit normalem Durchmesser bzw. den Schaftdurchmesser übergeht. Zu Beschränkung der axialen Bewegung des Tranponders 2 ist eine Hülse 40 auf den Bereich mit verringertem Durchmesser aufgeschoben. Diese Hülse 40 drückt den Transponder 2 axial gegen den Absatz 45. Die Position der Hülse 40 kann durch Flächenreibung durch Aufpressen, durch Verkleben oder ein anderes geeignetes Verfahren fixiert werden.

Gemäß dem in Fig. 5 dargestellten Ausführungsbeispiel sind die Aussendurchmesser der Hülse 40, des Transponders 2 und des Schafts 41 im wesentlichen identisch. Insbesondere ist die Umfangsfläche des Werkzeugs in dem Bereich zwischen der Hülse 40 und dem Schaft 41 im wesentlichen nicht uneben.

Es ist anzumerken, dass die Funktionen des Transponders, der Vorrichtungen zum Erkennen und Verändern der Codierungen des Magazins, die Definitionen der Gebrauchsinformationen zum medizinischen Werkzeug, die in dem vorhergehenden Ausführungsbeispiel angegeben sind, für das vorliegende Ausführungsbeispiel gleichermaßen anwendbar sind.

Die dargestellten Ausführungsbeispiele sollen nur beispielhaften Charakter haben. Mit den Ausführungsbeispielen ist nicht beabsichtigt, die in den beigefügten Ansprüchen definierte Erfindung zu beschränken. Die dargestellten Ausführungsbeispiele können miteinander beliebig kombiniert werden.

## Patentansprüche

1. Zahnmedizinischer Bohrer (4i), der Codierungen aufweist,
**dadurch gekennzeichnet, dass**
die Codierungen unter Berücksichtigung von Gebrauchsinformationen zum zahnmedizinischen Bohrer (4i) veränderbar sind, wobei die Codierungen in zumindest einen Transponder (2) als Datenträgerelement speicherbar sind, der an dem zahnmedizinischen Bohrer (4i) fest angebracht ist.

2. Zahnmedizinischer Bohrer (4i) gemäß Anspruch 1,
**gekennzeichnet durch**
Fixcodierungen, die zur Identifizierung eines bestimmten zahnmedizinischen Bohrers (4i) geeignet sind.

3. Zahnmedizinischer Bohrer (4i) gemäß einem der Ansprüche 1-2,
**dadurch gekennzeichnet, dass**
der Transponder (2) an dem zahnmedizinischen Bohrer (4i) aufsteckbar und/oder von diesem abnehmbar ausgebildet ist.

4. Zahnmedizinischer Bohrer (4i) gemäß einem der vorhergehenden Ansprüche,
**dadurch gekennzeichnet, dass**
der Transponder (2) an einem Umfang des zahnmedizinischen Bohrers (4i) vorgesehen ist.

5. Zahnmedizinischer Bohrer (4i) gemäß einem der Ansprüche 3-4,
**dadurch gekennzeichnet, dass**
der Transponder (2) an einem Absatz (45) des zahnmedizinischen Bohrers (4i) in Anlage bringbar ist.

6. Zahnmedizinischer Bohrer (4i) gemäß Ansprüch 5,
**dadurch gekennzeichnet, dass**
der Transponder (2) durch eine auf den zahnmedizinischen Bohrer aufsteckbare Hülse (40) in Anlage an dem Absatz (45) gehalten ist.

7. Zahnmedizinischer Bohrer (4i) gemäß Anspruch 6,
**dadurch gekennzeichnet, dass**
der Schaft (41) des zahnmedizinischen Bohrers (4i), der Transponder (2) und die Hülse (40) im Wesentlichen den gleichen Außendurchmesser haben.

8. Zahnmedizinischer Bohrer (4i) gemäß einem der vorhergehenden Ansprüche,
**dadurch gekennzeichnet, dass**
Gebrauchsinformationen die Position (3i) des zahnmedizinischen Bohrers (4i) an dem Magazin, eine werkzeugspezifische zulässige akkumulierte Belastung des zahnmedizinischen Bohrers, eine akkumulierte Teilbelastung des zahnmedizinischen Bohrers (4i) und/oder die Anzahl der gefahrenen Sterilisationszyklen für den zahnmedizinischen Bohrer unter Berücksichtigung insbesondere des Drehmoments, der Drehrichtung und der Drehzahl umfassen.

9. Zahnmedizinischer Bohrer (4i) gemäß einem der vorhergehenden Ansprüche,
**dadurch gekennzeichnet, dass**
der zahnmedizinische Bohrer (4i) vorzugsweise ein Endo-Bohrer ist.

10. System bestehend aus einem zahnmedizinischen Bohrer (4i) gemäß einem der Ansprüche 1-9 und einer Vorrichtung (7,9) zur Aufnahme des zahnmedizinischen Bohrers (4i) nach einem der Ansprüche 1-9, wobei die Vorrichtung aufweist
eine Einrichtung zum Erkennen von Codierungen des zahnmedizinischen Bohrers und zum Verändern der Codierungen unter Berücksichtigung von Gebrauchsinformationen zum zahnmedizinischen Bohrer (4i).

11. System gemäß Anspruch 10,
**dadurch gekennzeichnet, dass**
die Einrichtung Fixcodierungen des zahnmedizinischen Bohrers (4i) erkennen und/oder erstellen kann, die zur Identifizierung eines bestimmten zahnmedizinischen Bohrers (4i) geeignet sind.

12. System gemäß Anspruch 11,
**dadurch gekennzeichnet, dass**
die Einrichtung Codierungen und/oder Fixcodierungen erkennen kann, die in zumindest einem an dem zahnmedizinischen Bohrer (4i) fest angebrachten Transponder (2) als Datenträgerelement speicherbar sind.

13. System gemäß einem der Ansprüche 10-12,
**dadurch gekennzeichnet, dass**
die Gebrauchsinformationen die Position des zahnmedizinischen Bohrers (4i) an einem Magazin, eine werkzeugspezifische maximale Belastungsakkumulation und/oder eine Teilbelastungsakkumulation des zahnmedizinischen Bohrers umfassen.

14. System gemäß einem der Ansprüche 10-12 mit einem Behandlungsgerät (B) zur Steuerung und zum Antrieb des zahnmedizinischen Bohrers (4i),
**dadurch gekennzeichnet, dass**
der zahnmedizinische Bohrer (4i) vorzugsweise ein Endo-Bohrer ist.

15. System gemäß Anspruch 14,
**dadurch gekennzeichnet, dass**
die Vorrichtung (7,9) zur Datenübertragung mit dem Behandlungsgerät (B) verbunden oder integriert ist.

16. System gemäß Anspruch 15,
**dadurch gekennzeichnet, dass**
die Vorrichtung (7,9) mit dem Behandlungsgerät (B) zur Datenübertragung mit einer Datenübertragungseinrichtung (10,11) versehen ist.

17. System gemäß Anspruch 16,
**dadurch gekennzeichnet, dass**
die Datenübertragungseinrichtung (10,11) die Datenübertragung zwischen zwei voneinander trennbaren Elementen (20, 30) des Behandlungsgeräts (B) kontaktlos bewirkt.

18. System gemäß Anspruch 16 oder 17,
**dadurch gekennzeichnet, dass**
die Datenübertragungseinrichtung (10,11) die Daten induktiv überträgt.

19. System gemäß Anspruch 17 oder 18,
**dadurch gekennzeichnet, dass**
die Datenübertragungseinrichtung (10,11) an jedem der zwei voneinander trennbaren Elementen (20; 30) eine Induktionsspule (10; 11) aufweist.

20. System gemäß einem der Ansprüche 17-19,
**dadurch gekennzeichnet, dass**
die voneinander trennbaren Elemente (20,30) des Behandlungsgeräts (B) ein Handstück (20) und ein Winkelstück (30) umfassen.

21. System gemäß einem der Ansprüche 10-20,
**dadurch gekennzeichnet, dass**
die Vorrichtung (9) an dem Handstück (20) angeordnet ist.

22. System gemäß einem der Ansprüche 10-21 mit einem Bereitstellungsgerät (P) zur Bereitstellung und Auswahl von zahnmedizinischen Bohrern zur Bestückung eines Magazins (1),
**dadurch gekennzeichnet, dass**
die Vorrichtung (7,9) zur Datenübertragung mit dem Bereitstellungsgerät (P) verbunden ist.

## Claims

1. Dental drill (4i) comprising codings,
**characterized in that**
the codings can be modified taking into account usage information for the dental drill (4i), wherein the codings can be stored in at least one transponder (2) as data storage element, which is securely attached to the dental drill (4i).

2. Dental drill (4i) according to Claim 1,
**characterized by**
fixed codings suitable for identifying a specific dental drill (4i).

3. Dental drill (4i) according to one of Claims 1-2,
**characterized in that**
the transponder (2) is embodied to be plugged onto and/or removed from the dental drill (4i).

4. Dental drill (4i) according to one of the preceding claims,
**characterized in that**
the transponder (2) is provided on a circumference of the dental drill (4i).

5. Dental drill (4i) according to one of Claims 3-4,
**characterized in that**
the transponder (2) can be made to abut with a recess (45) of the dental drill (4i).

6. Dental drill (4i) according to Claim 5,
**characterized in that**
the transponder (2) is kept in abutment with the recess (45) by means of a sleeve (40) which can be plugged onto the dental drill.

7. Dental drill (4i) according to Claim 6,
**characterized in that**
the shank (41) of the dental drill (4i), the transponder (2) and the sleeve (40) substantially have the same external diameter.

8. Dental drill (4i) according to one of the preceding claims,
**characterized in that**
usage information comprises the position (3i) of the dental drill (4i) in the storage, a tool-specific admissible accumulated load of the dental drill, an accumulated partial load of the dental drill (4i) and/or the number of carried out sterilization cycles for the dental drill, taking into account, in particular, the torque, the direction of rotation and the rotational speed.

9. Dental drill (4i) according to one of the preceding claims,
**characterized in that**
the dental drill (4i) is preferably an endo-drill.

10. System consisting of a dental drill (4i) according to one of Claims 1-9 and a device (7, 9) for holding the dental drill (4i) according to one of Claims 1-9, wherein the device comprises
an apparatus for identifying codings of the dental drill and for modifying the codings taking into account usage information for the dental drill (4i).

11. System according to Claim 10,
**characterized in that**
the apparatus can identify and/or create fixed codings of the dental drill (4i), which are suitable for identifying a specific dental drill (4i).

12. System according to Claim 11,
**characterized in that**
the apparatus can identify codings and/or fixed codings, which can be stored in at least one transponder (2) as data storage element, which is securely attached to the dental drill (4i).

13. System according to one of Claims 10-12,
**characterized in that**
the usage information comprises the position of the dental drill (4i) in a storage, a tool-specific maximum load accumulation and/or partial load accumulation of the dental drill.

14. System according to one of Claims 10-12, comprising a treatment instrument (B) for controlling and driving the dental drill (4i),
**characterized in that**
the dental drill (4i) is preferably an endo-drill.

15. System according to Claim 14,
**characterized in that**
the device (7, 9) is connected to, or integrated in, the treatment instrument (B) for data transmission purposes.

16. System according to Claim 15,
**characterized in that**
the device (7, 9) comprising the treatment instrument (B) is provided with a data transmission apparatus (10, 11) for data transmission purposes.

17. System according to Claim 16,
**characterized in that**
the data transmission apparatus (10, 11) brings about contactless data transmission between two elements (20, 30) that can be separated from one another of the treatment instrument (B).

18. System according to Claim 16 or 17,
**characterized in that**
the data transmission apparatus (10, 11) transmits the data inductively.

19. System according to Claim 17 or 18,
**characterized in that**
the data transmission apparatus (10, 11) comprises an induction coil (10; 11) on each of the two elements (20; 30) that can be separated from one another.

20. System according to one of Claims 17-19,
**characterized in that**
the elements (20, 30) that can be separated from one another of the treatment instrument (B) comprise a handpiece (20) and an angle piece (30).

21. System according to one of Claims 10-20,
**characterized in that**
the device (9) is arranged on the handpiece (20).

22. System according to one of Claims 10-21, comprising a provision instrument (P) for providing and selecting dental drills for equipping a storage (1),
**characterized in that**
the device (7, 9) is connected to the provision instrument (P) for data transmission purposes.

## Revendications

1. Foret médical dentaire (4i) présentant des codages,
**caractérisée en ce que**
les codages peuvent être modifiés en tenant compte d'informations d'utilisation de la foreuse médicale dentaire (4i), les codages pouvant être conservés en mémoire dans au moins un transpondeur (2) servant d'élément support de données et installés fixement sur le foret médical dentaire (4i).

2. Foret médical dentaire (4i) selon la revendication 1, **caractérisé par** des codages fixes qui conviennent pour identifier un foret médical dentaire (4i) défini.

3. Foret médical dentaire (4i) selon l'une des revendications 1 et 2, **caractérisé en ce que** le transpondeur (2) peut être enfiché sur le foret médical dentaire (4i) et/ou être enlevé de ce dernier.

4. Foret médical dentaire (4i) selon l'une des revendications précédentes, **caractérisé en ce que** le transpondeur (2) est prévu à la périphérie de la foreuse médicale dentaire (4i).

5. Foret médical dentaire (4i) selon l'une des revendications 3 et 4, **caractérisé en ce que** le transpondeur (2) peut être placé sur un appendice (45) du foret médical dentaire (4i).

6. Foret médical dentaire (4i) selon la revendication 5, **caractérisé en ce que** le transpondeur (2) est maintenu en position sur l'appendice (45) par une douille (40) qui peut être enfichée sur le forte médical dentaire.

7. Foret médical dentaire (4i) selon la revendication 6, **caractérisé en ce que** la tige (41) du foret médical dentaire (4i), le transpondeur (2) et la douille (40) possèdent essentiellement le même diamètre.

8. Foret médical dentaire (4i) selon l'une des revendications précédentes, **caractérisé en ce que** des informations d'utilisation comprennent la position (3i) du foret médical dentaire (4i) sur le magasin, une charge admissible cumulée spécifique au foret médical dentaire, une charge partielle cumulée du foret médical dentaire (4i) et/ou le nombre de cycles de stérilisation subis par le foret médical dentaire en tenant compte en particulier du couple de rotation, du sens de rotation et de la vitesse de rotation.

9. Foret médical dentaire (4i) selon l'une des revendications précédentes, **caractérisé en ce que** le foret médical dentaire (4i) est de préférence un endo-foret.

10. Système constitué d'un foret médical dentaire (4i) selon l'une des revendications 1 à 9 et d'un dispositif (7, 9) de réception du foret médical dentaire (4i) selon l'une des revendications 1 à 9, le dispositif présentant un dispositif de détection de codages du foret médical dentaire et des modifications des codages en tenant compte d'informations d'utilisation concernant le foret médical dentaire (4i).

11. Système selon la revendication 10, **caractérisé en ce que** le dispositif peut détecter et/ou former des codages fixes du foret médical dentaire (4i), qui conviennent pour identifier un foret médical dentaire (4i) défini.

12. Système selon la revendication 11, **caractérisé en ce que** le dispositif peut détecter des codages et/ou des codages fixes qui peuvent être conservés en mémoire dans au moins un transpondeur (2) installé fixement sur le foret médical dentaire (4i) et servant d'élément porteur de données.

13. Système selon l'une des revendications 10 à 12, **caractérisé en ce que** les informations d'utilisation comprennent la position du foret médical dentaire (4i) sur un magasin, une charge maximale cumulée spécifique à l'outil et/ou une charge partielle cumulée du foret médical dentaire.

14. Système selon l'une des revendications 10 à 12, présentant un appareil de manipulation (B) qui commande et entraîne le foret médical dentaire (4i), **caractérisé en ce que** le foret médical dentaire (4i) est de préférence un endo-foret.

15. Système selon la revendication 14, **caractérisé en ce que** le dispositif (7, 9) de transfert de données est relié ou intégré à l'appareil de manipulation (B).

16. Système selon la revendication 15, **caractérisé en ce que** le dispositif (7, 9) et l'appareil de manipulation (B) est doté d'un dispositif (10, 11) de transfert de données qui assure le transfert des données.

17. Système selon la revendication 16, **caractérisé en ce que** le dispositif (10, 11) de transfert de données effectue les transferts des données entre deux éléments (20, 30) de l'appareil de manipulation (B) séparés l'un de l'autre.

18. Système selon les revendications 16 ou 17, **caractérisé en ce que** le dispositif (10, 11) de transfert de données transfère les données par induction.

19. Système selon les revendications 17 ou 18, **caractérisé en ce que** le dispositif (10, 11) de transfert de données présente une bobine d'induction (10; 11) sur chacun des deux éléments (20; 30) qui peuvent être séparés l'un de l'autre.

20. Système selon l'une des revendications 17 à 19, **caractérisé en ce que** les éléments (20, 30) de l'appareil de manipulation (B) aptes à être séparés l'un de l'autre comprennent une poignée (20) et une pièce coudée (30).

21. Système selon l'une des revendications 10 à 20, **caractérisé en ce que** le dispositif (9) est disposé sur la poignée (20).

22. Système selon l'une des revendications 10 à 21 et doté d'un appareil de préparation (P) qui prépare et sélectionne les forets médicaux dentaires destinés à équiper un magasin (1),
**caractérisé en ce que**
le dispositif (7, 9) de transfert de données est raccordé à l'appareil de préparation (P).
